# EUROPEAN PATENT APPLICATION

(11) **EP 4 614 673 A1**
(43) Date of publication of application: **10.09.2025**
(21) Application number: 25160443.5
(22) Date of filing: 27.02.2025
(51) Int. Cl.: H01M 10/54, C22B 7/00, C22B 15/00, C22B 21/00

(54) **FOIL RECOVERY APPARATUS**

(30) Priority: 04.03.2024 CN 202410241446
(71) Applicant: Xiamen Hithium Energy Storage Technology Co., Ltd., Xiamen, Fujian 361100 (CN)
(72) Inventor: LIN, Tingxiao, Xiamen, Fujian, 361100 (CN); CHEN, Jiazhu, Xiamen, Fujian, 361100 (CN)
(74) Representative: Ipside

(57) **Abstract**

A foil recovery apparatus is provided and includes a base, a conveying device, and a collecting device. The conveying device includes a conveyor belt and a first roller set. The first roller set includes a first conveying roller and a second conveying roller. The conveyor belt is driven around the first conveying roller and the second conveying roller for transmission. The collecting device includes a storage bin and a carrying platform. The storage bin includes a pushing plate and defines a receiving cavity. The storage bin defines a first opening. The pushing plate and the first opening are located on two opposite sides of the receiving cavity, respectively, and the first opening is opposite to the pushing plate. The carrying platform includes a pressing plate. The storage bin is disposed at one side of the second conveying roller away from the first conveying roller.

## Description

### TECHNICAL FIELD

The disclosure relates to the field of battery cell recovery technology, and in particular, to a foil recovery apparatus.

### BACKGROUND

In a positive electrode of a secondary battery, aluminum foil generally serves as a substrate, and a positive electrode material is uniformly coated on both sides of the aluminum foil. In a negative electrode of the secondary battery, copper foil generally serves as a substrate, and a negative electrode material is uniformly coated on both sides of the copper foil. In order to reduce pollution and improve energy utilization efficiency, old battery cells are typically recycled. In the old battery cells, a foil (including the aluminum foil and the copper foil) is coated with electrode materials on the surface. Therefore, during the recycling process, the foil in the old battery cells needs to be cleaned first, and then the cleaned foil is collected. However, currently, the collection of the cleaned foil is mostly done manually, leading to low collection efficiency and increased foil recycling costs.

### SUMMARY

A foil recovery apparatus includes a base, a conveying device, and a collecting device. The conveying device includes a conveyor belt and a first roller set, the first roller set is connected to the base and includes a first conveying roller and a second conveying roller, the conveyor belt has a carrying surface, the first conveying roller is opposite to the second conveying roller in a first direction, the conveyor belt is driven around the first conveying roller and the second conveying roller for transmission, and the first direction is a conveying direction of the conveyor belt. The collecting device includes a storage bin and a carrying platform. The storage bin includes a pushing plate and defines a receiving cavity, the storage bin defines a first opening, the pushing plate and the first opening are located on two opposite sides of the receiving cavity in the first direction, respectively, and the carrying platform includes a pressing plate. In the first direction, the storage bin is disposed at one side of the second conveying roller away from the first conveying roller, the carrying platform is disposed at one side of the storage bin where the first opening is defined, the pressing plate is opposite to the pushing plate, the conveying device is configured to convey a foil into the receiving cavity, and the pressing plate is operable to enter the receiving cavity through the first opening to compress the foil within the receiving cavity along with the pushing plate.

### BRIEF DESCRIPTION OF THE DRAWINGS

To describe technical solutions in embodiments of the disclosure more clearly, the following briefly introduces the accompanying drawings required for describing the embodiments. Apparently, the accompanying drawings in the following description merely illustrate some embodiments of the disclosure. Those of ordinary skill in the art may also obtain other accompanying drawings based on these provided herein without creative efforts.
FIG. 1 is a schematic structural view of a foil recovery apparatus provided in embodiments of the disclosure.
FIG. 2 is a schematic structural view of a conveying device of the foil recovery apparatus in FIG. 1.
FIG. 3 is a schematic structural view illustrating an assembly of a conveyor belt of the conveying device in FIG. 2.
FIG. 4 is a schematic structural view illustrating an assembly of a pressing belt of the conveying device in FIG. 2.
FIG. 5 is a schematic structural view of a dewatering member of a dewatering assembly in FIG. 1.
FIG. 6 is a schematic structural view illustrating an assembly of a pressing belt and a dewatering assembly in FIG. 1.
FIG. 7 is a schematic structural view of a separation member of a dewatering assembly in FIG. 1.
FIG. 8 is a schematic structural view of a collecting device of the foil recovery apparatus in FIG. 1, viewed from a first direction.
FIG. 9 is a schematic structural view of the collecting device in FIG. 8, viewed from a second direction.
FIG. 10 is a schematic structural view of a carrying platform in FIG. 8.
FIG. 11 is an exploded schematic structural view of the carrying platform in FIG. 10.
FIG. 12 is a partial exploded schematic structural view of the carrying platform in FIG. 11.
FIG. 13 is a schematic structural view of a cutting member in FIG. 8.

Reference numbers are described as follows:
1000 - foil recovery apparatus, 400 - base, 100 - conveying device, 200 - dewatering assembly, 300 - collecting device, 30 - conveyor belt, 40 - pressing belt, 90 - rotary brush, 10 - first conveying roller, 20 - second conveying roller, 50 - first common roller, 60 - second common roller, 70 - third common roller, 80 - connecting roller, 31 - carrying surface, 32 - connecting surface, 33 - air hole, 41 - pressing surface, 42 - rotating surface, 220 - dewatering member, 230 - separation member, 240 - isolation plate, 221 - clamping portion, 2211 - fixed plate, 2212 - first swinging arm, 2213 - second swinging arm, 2214 - first pressing roller, 2215 - second pressing roller, 2216 - first connecting rod, 2217 - second connecting rod, 231 - connection portion, 232 - blow nozzle, 310 - storage bin, 320 - carrying platform, 360 - recovery member, 370 - cutting member, 311 - bottom plate, 312 - side plate, 313 - pushing plate, 314 - sliding rail, 315 - switch driving member, 3151 - drive shaft, 3111 - receiving surface, 3112 - transition surface, 3131 - abutting surface, 3132 - sliding surface, 3133 - sliding groove, 3134 - slider, 330 - carrying member, 340 - pushing member, 350 - guiding member, 331 - carrying plate, 332 - pressing plate, 333 - mounting plate, 3311 - carrying surface, 3312 - mounting surface, 351 - guiding rod, 352 - sleeve, 353 - linear bearing, 3331 - drive hole, 3332 - balance hole, 3321 - pressing surface, 3322 - pushing surface, 361 - recovery basket, 362 - fixing portion, 3611 - inner surface, 3612 - outer surface, 363 - recovery opening, 371 - fixed frame, 372 - connecting shaft, 373 - scraping blade, 3711 - first plate body, 3712 - second plate body, 3713 - mounting portion, 3731 - limiting portion, 3732 - scraping portion, S1 - conveying start point, S2 - conveying end point, M1 - first roller set, M2 - second roller set, 600 - driving motor, 43 - ventilation hole, *O* - pressing region, 2321 - outlet, 3161 - first opening, 3162 - second opening, 316 - receiving cavity, 3531 - first end face, 3532 - second end face, 3533 - through hole, 3521 - through hole, 341 - pushing rod, 3734 - scraping end, 3733 - connection hole.

### DETAILED DESCRIPTION

The technical solutions in embodiments of the disclosure are clearly and completely described in the following with reference to the accompanying drawings in the embodiments of the disclosure. Apparently, the described embodiments are merely part of rather than all of the embodiments of the disclosure. All other embodiments obtained by those of ordinary skill in the art based on the embodiments of the disclosure without creative efforts are within the scope of the disclosure.

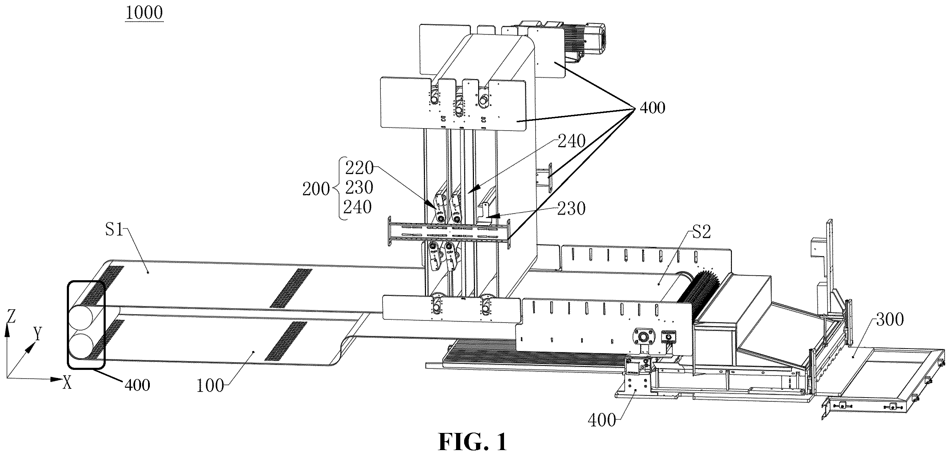

Referring to FIG. 1, FIG. 1 is a schematic structural view of a foil recovery apparatus provided in the embodiments of the disclosure. The embodiments of the disclosure provide a foil recovery apparatus 1000. The foil recovery apparatus 1000 includes a base 400, a conveying device 100, a dewatering assembly 200, and a collecting device 300. The conveying device 100 is configured to convey a foil. The conveying device 100 has a conveying start point S1 and a conveying end point S2. The conveying start point S1 and the conveying end point S2 are disposed at two opposite ends of the conveying device 100, respectively. The dewatering assembly 200 is located between the conveying start point S1 and the conveying end point S2 of the conveying device 100. The dewatering assembly 200 is configured to dewater the foil conveyed by the conveying device 100. The collecting device 300 is disposed at the conveying end point S2 of the conveying device 100, and is configured to compress and collect the foil.

It may be noted that the foil recovery apparatus 1000 provided in the embodiments of the disclosure is applicable to foils including, but not limited to, aluminum foil, copper foil, silver foil, and foils made of other materials, which is not specifically limited herein. The conveying start point S1 and the conveying end point S2 correspond to the two opposite ends of the conveying device 100 in a first direction and are not specific structures on the conveying device 100, and thus do not impose specific structural limitations on the conveying device 100.

Only a partial structure of the base 400 is illustrated in FIG. 1, which does not impose any limitations on the overall structure of the base 400. The base 400 may also include other structures. The base 400 can be formed as a single-piece structure or a modular structure, which is not specifically limited herein.

For ease of illustration, a length direction of the foil recovery apparatus 1000 illustrated in FIG. 1 is defined as X-axis direction, which may also be referred to as a first direction. The first direction is also a direction in which the conveying device 100 performs transmission. A width direction of the foil recovery apparatus 1000 is Y-axis direction. A height direction of the foil recovery apparatus 1000 is Z-axis direction, which may also be referred to as a second direction. X-axis direction, Y-axis direction, and Z-axis direction are mutually perpendicular to each other. Orientation terms such as "up" and "down" referred to in the embodiments of the disclosure are described with reference to orientations illustrated in FIG. 1, where positive Z-axis direction is defined as "up" and negative Z-axis direction is defined as "down". These terms do not impose any limitations on the foil recovery apparatus 1000. The terms "same", "equal", or "parallel" referred to herein allow for a certain tolerance.

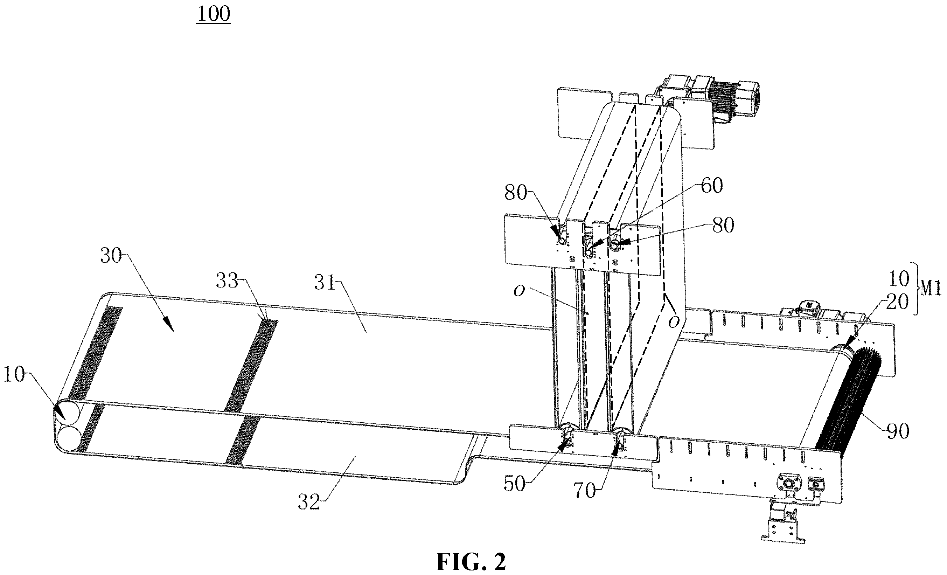

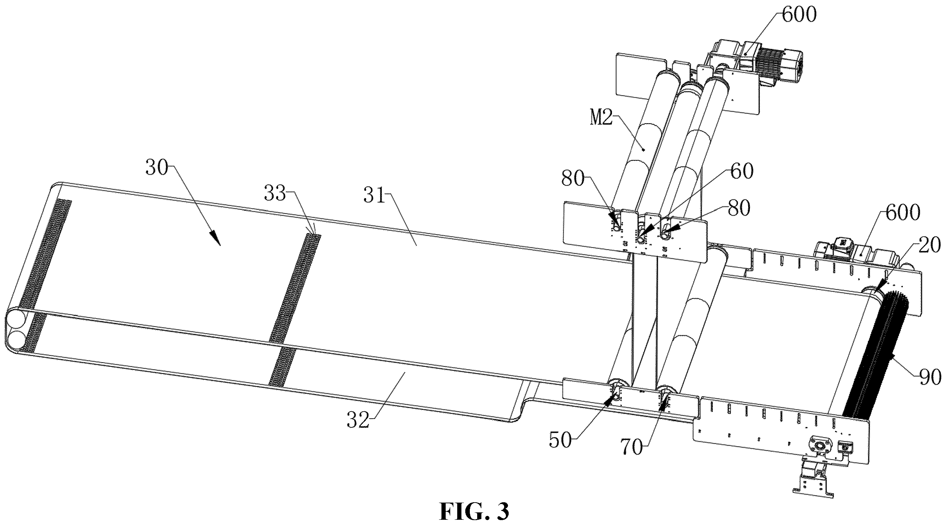

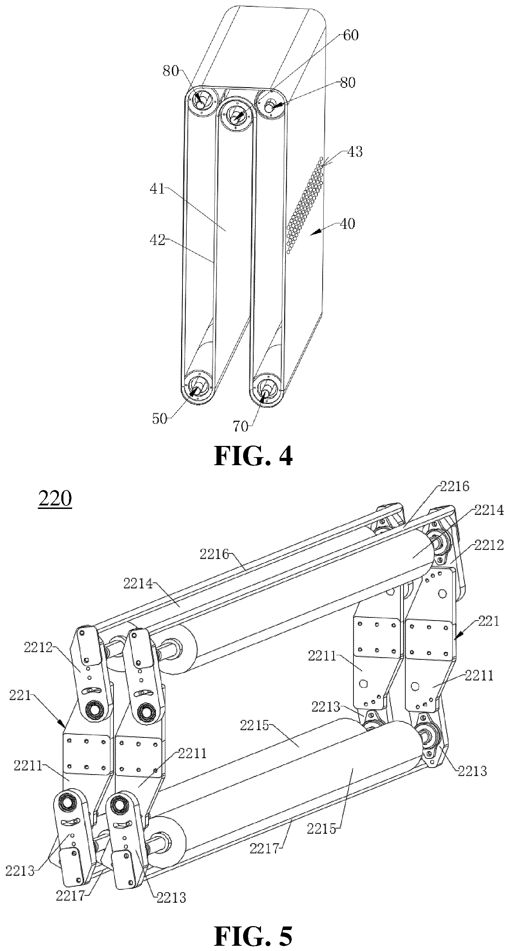

Referring to FIGS. 2 to 4, FIG. 2 is a schematic structural view of the conveying device of the foil recovery apparatus in FIG. 1, FIG. 3 is a schematic structural view illustrating an assembly of a conveyor belt of the conveying device in FIG. 2, and FIG. 4 is a schematic structural view illustrating an assembly of a pressing belt of the conveying device in FIG. 2.

The conveying device 100 includes a first roller set M1, a second roller set M2, a conveyor belt 30, a pressing belt 40, and a rotary brush 90. All the first roller set M1, the second roller set M2, and the rotary brush 90 are mounted to the base 400. The conveyor belt 30 is wound around the first roller set M1 and the second roller set M2. The pressing belt 40 is wound around the second roller set M2.

The first roller set M1 includes a first conveying roller 10 and a second conveying roller 20. The first conveying roller 10 is opposite to the second conveying roller 20 in the first direction (X-axis direction). Two opposite ends of the first conveying roller 10 are rotatably connected to the base 400. Two opposite ends of the second conveying roller 20 are rotatably connected to the base 400. The first conveying roller 10 and the second conveying roller 20 are respectively connected to two opposite ends of the base 400. The first conveying roller 10 is parallel to the second conveying roller 20. The first conveying roller 10 is located at the conveying start point S1 of the conveying device 100. The second conveying roller 20 is located at the conveying end point S2 of the conveying device 100. At least one of the first conveying roller 10 or the second conveying roller 20 is connected to a driving motor 600. In this embodiment, the first conveying roller 10 includes two sub-conveying rollers. The second conveying roller 20 is connected to the driving motor 600, which is configured to drive the second conveying roller 20 to rotate.

In other embodiments, the first conveying roller 10 may include only one sub-conveying roller. Alternatively, the first conveying roller 10 may include three or more sub-conveying rollers. Alternatively, the first conveying roller 10 may also be connected to the driving motor 600. Alternatively, both the first conveying roller 10 and the second conveying roller 20 may be connected to the driving motor 600.

It may be noted that the sub-conveying roller of the first conveying roller 10 may be the same as or different from a sub-conveying roller of the second conveying roller 20 in structure, which is not specifically limited herein.

In the first direction (X-axis direction), the second roller set M2 is located between the first conveying roller 10 and the second conveying roller 20. The second roller set M2 includes a first common roller 50, a second common roller 60, a third common roller 70, and two connecting rollers 80. Two opposite ends of the first common roller 50 are rotatably connected to the base 400. Two opposite ends of the second common roller 60 are rotatably connected to the base 400. Two opposite ends of the third common roller 70 are rotatably connected to the base 400. Two opposite ends of each of the two connecting rollers 80 are rotatably connected to the base 400. In the first direction, the first common roller 50 and the third common roller 70 are opposite to each other and are located between the first conveying roller 10 and the second conveying roller 20. In the second direction (Z-axis direction), the second common roller 60 is spaced apart from the first common roller 50 and the third common roller 70. An orthographic projection of the second common roller 60 on the conveyor belt 30 is located between an orthographic projection of the first common roller 50 on the conveyor belt 30 and an orthographic projection of the third common roller 70 on the conveyor belt 30. In the second direction (Z-axis direction), one of the two connecting rollers 80 is opposite to and spaced apart from the first common roller 50, and another one of the two connecting rollers 80 is opposite to and spaced apart from the third common roller 70. Both the two connecting rollers 80 are disposed at one side of the second common roller 60 away from the first common roller 50 and the third common roller 70. In this embodiment, one of the two connecting rollers 80 is connected to the driving motor 600, and the driving motor 600 is configured to drive the connecting roller 80 connected to the driving motor 600 to rotate. In other embodiments, the first common roller 50, the second common roller 60, the third common roller 70, and the another one of the two connecting rollers 80 may also be connected to the driving motor 600.

It may be noted that the first common roller 50, the second common roller 60, the third common roller 70, and the two connecting rollers 80 may be the same as or different from each other in structure, which is not specifically limited herein.

The conveyor belt 30 is a loop. The conveyor belt 30 includes a carrying surface 31 and a connecting surface 32. The carrying surface 31 is opposite to the connecting surface 32 in a thickness direction of the conveyor belt 30. The carrying surface 31 is configured to carry the foil. The conveyor belt 30 defines multiple air holes 33 that are evenly distributed. In the thickness direction of the conveyor belt 30, the multiple air holes 33 extend through both the carrying surface 31 and the connecting surface 32 of the conveyor belt 30. It is noted that, the air holes 33 facilitate air passing through the conveyor belt 30 to contact a surface of the foil that is close to the conveyor belt 30. This not only aids in drying the foil but also contributes to a more stable contact between the foil and the conveyor belt 30.

It may be noted that the multiple air holes 33 on the conveyor belt 30 in FIG. 2 are illustrated for illustrative purposes only, and does not impose specific limitations on the distribution position and quantity of the multiple air holes 33.

The conveyor belt 30 is driven sequentially around the first conveying roller 10, the second roller set M2, and the second conveying roller 20 for transmission. Specifically, the conveyor belt 30 is arranged, through the first conveying roller 10 and the first common roller 50, around the second common roller 60 in the second direction (Z-axis direction), and then arranged, through the third common roller 70, around the second conveying roller 20 in the first direction (X-axis direction), to achieve cyclic transmission. The connecting surface 32 of the conveyor belt 30 is rotatably connected to the first conveying roller 10, the second common roller 60, and the second conveying roller 20. The carrying surface 31 of the conveyor belt 30 is rotatably connected to the first common roller 50 and the third common roller 70. In some embodiments, all the first conveying roller 10, the second common roller 60, and the second conveying roller 20 are rotatably connected to the connecting surface 32 of the conveyor belt 30. Both the first common roller 50 and the third common roller 70 are rotatably connected to the carrying surface 31 of the conveyor belt 30.

The pressing belt 40 is a loop. The pressing belt 40 includes a pressing surface 41 and a rotating surface 42. The pressing surface 41 is opposite to the rotating surface 42 in a thickness direction of the pressing belt 40. The pressing belt 40 defines multiple ventilation holes 43. The multiple ventilation holes 43 extend through both the pressing surface 41 and the rotating surface 42 in the thickness direction of the pressing belt 40. The multiple ventilation holes 43 are evenly distributed.

It may be noted that the multiple ventilation holes 43 on the pressing belt 40 in FIG. 4 is illustrated for illustrative purposes only, and does not impose specific limitations on the distribution position and quantity of the multiple ventilation holes 43.

The pressing belt 40 is driven around the second roller set M2 for transmission. The pressing belt 40 is configured to perform transmission in the second direction (Z-axis direction). Specifically, the pressing belt 40 is arranged, through the first common roller 50, around the second common roller 60 in the second direction, and then arranged, through the third common roller 70, around the two connecting rollers 80 in the second direction, to achieve cyclic transmission. The rotating surface 42 of the pressing belt 40 is rotatably connected to the first common roller 50, the third common roller 70, and the two connecting rollers 80. The pressing surface 41 of the pressing belt 40 is rotatably connected to the second common roller 60. It may be understood that the entire pressing belt 40 has an n-shape.

In this embodiment, the driving motor 600 connected to the second conveying roller 20 is configured to drive the second conveying roller 20 to rotate, rotation of the second conveying roller 20 can drive the conveyor belt 30 to move, and movement of the conveyor belt 30 can in turn drive the first conveying roller 10 and the second common roller 60 to rotate. The driving motor 600 connected to one of the two connecting rollers 80 is configured to drive the connecting roller 80 to rotate, rotation of the connecting roller 80 can drive the pressing belt 40 to move, and movement of the pressing belt 40 can in turn drive the another one of the two connecting rollers 80, the first common roller 50, and the third common roller 70 to rotate.

A rotational linear velocity of the first conveying roller 10, a rotational linear velocity of the second conveying roller 20, a rotational linear velocity of the first common roller 50, a rotational linear velocity of the second common roller 60, a rotational linear velocity of the third common roller 70, and a rotational linear velocity of the two connecting rollers 80 are the same as each other. A rotational direction of the first conveying roller 10, a rotational direction of the second conveying roller 20, and a rotational direction of the second common roller 60 are the same as each other. A rotational direction of the first common roller 50, a rotational direction of the third common roller 70, and a rotational direction of each of the two connecting rollers 80 each are opposite to the rotational direction of the second conveying roller 20.

The conveyor belt 30 is in contact with the pressing belt 40 to form a pressing region O when the conveyor belt 30 is driven around the second roller set M2 for transmission. Part of the conveyor belt 30 in the pressing region *O* and part of the pressing belt 40 in the pressing region O disengage from each other when the part of the conveyor belt 30 in the pressing region O disengages from the second roller set M2, to allow the part of the conveyor belt 30 in the pressing region *O* to move in the first direction (X-axis direction) and the part of the pressing belt 40 in the pressing region *O* to move in the second direction (Z-axis direction). In the case where the foil is placed on the carrying surface 31 of the conveyor belt 30, when the conveyor belt 30 conveys the foil to the second roller set M2 for transmission, the foil will be clamped between the pressing belt 40 and the conveyor belt 30. When the part of the conveyor belt 30 in the pressing region *O* disengages from the second roller set M2, the foil will continue to move along with the conveyor belt 30 in the first direction (X-axis direction).

It may be noted that during operation of the foil recovery apparatus 1000, the conveyor belt 30 and the pressing belt 40 continuously move. Therefore, part of the conveyor belt 30 corresponding to the pressing region *O* is not a fixed part of the conveyor belt 30, but changes dynamically as the conveyor belt 30 moves. Similarly, part of the pressing belt 40 corresponding to the pressing region *O* is not a fixed part of the pressing belt 40, but changes dynamically as the pressing belt 40 moves.

In the first direction (X-axis direction), the rotary brush 90 is disposed at one side of the second conveying roller 20 away from the first conveying roller 10. That is, the rotary brush 90 is positioned at the conveying end point S2 of the conveying device 100. Two opposite ends of the rotary brush 90 are rotatably connected to the base 400. The rotary brush 90 is connected to the driving motor. A rotational direction of the rotary brush 90 is the same as that of the second conveying roller 20. A rotational linear velocity of the rotary brush 90 is greater than a linear velocity of the conveyor belt 30. For example, the rotational linear velocity of the rotary brush 90 is 1.2 times that of the conveyor belt 30. In the embodiments of the disclosure, a ratio of the rotational linear velocity of the rotary brush 90 to the linear velocity of the conveyor belt 30 is not specifically limited.

Referring to FIG. 1, the dewatering assembly 200 includes a dewatering member 220, a separation member 230, and an isolation plate 240.

Referring to FIG. 5, FIG. 5 is a schematic structural view of the dewatering member of the dewatering assembly in FIG. 1. The dewatering member 220 includes two clamping portions 221. The two clamping portions 221 are arranged adjacently.

Each clamping portion 221 includes a fixed plate 2211, two first swinging arms 2212, two second swinging arms 2213, a first pressing roller 2214, a second pressing roller 2215, a first connecting rod 2216, and a second connecting rod 2217. In a width direction of the clamping portion 221, the two fixed plates 2211 are opposite to each other. In a height direction of the clamping portion 221, the two first swinging arms 2212 are connected to one end of the fixed plate 2211 away from the second swinging arm 2213, and the two second swinging arms 2213 are connected to one end of the fixed plate 2211 away from the first swinging arm 2212. One end of one of the two first swinging arms 2212 and one end of another one of the two first swinging arms 2212 are rotatably connected to the two fixed plates 2211, respectively. The first pressing roller 2214 is located between and connected to another end of the one of the two first swinging arms 2212 and another end of the another one of the two first swinging arms 2212. One end of one of the two second swinging arms 2213 and one end of another one of the two second swinging arms 2213 are rotatably connected to the two fixed plates 2211, respectively. The second pressing roller 2215 is located between and connected to another end of the one of the two second swinging arms 2213 and another end of the another one of the two second swinging arms 2213. The first connecting rod 2216 is located between and connected to the two first swinging arms 2212. The second connecting rod 2217 is located between and connected to the two second swinging arms 2213.

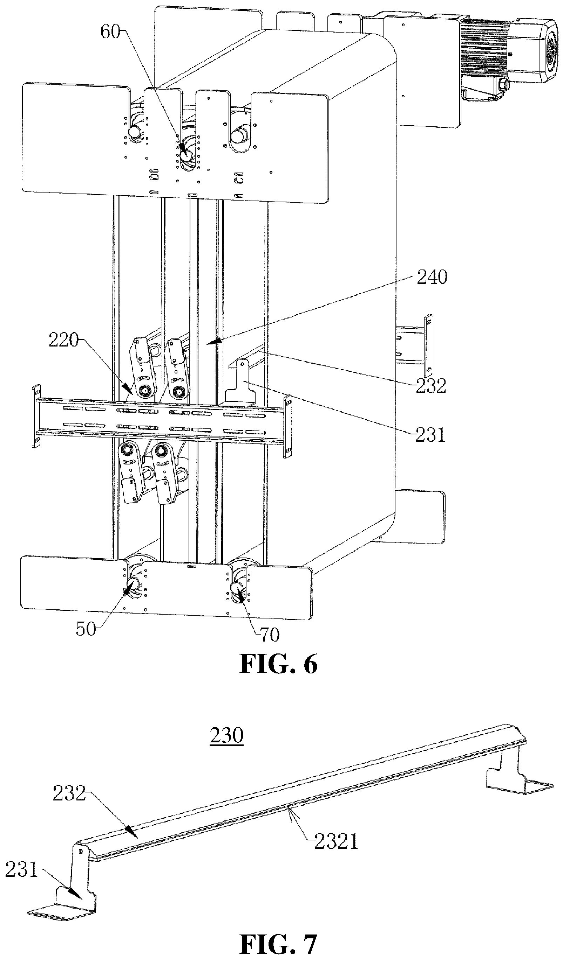

Referring to FIG. 5 and FIG. 6, FIG. 6 is a schematic structural view illustrating an assembly of the pressing belt and the dewatering assembly in FIG. 1. The dewatering member 220 is fixed to the base 400. In the first direction, the dewatering member 220 is located between the first common roller 50 and the second common roller 60. In the second direction, the dewatering member 220 is located between the first common roller 50 and the second common roller 60. The pressing region *O*, formed by a close contact between the conveyor belt 30 and the pressing belt 40, can pass through the two clamping portions 221. Specifically, the two fixed plates 2211 of the two clamping portions 221 are arranged adjacently. In a height direction of the dewatering member 220, the first swinging arms 2212 of the two clamping portions 221 are disposed at the same end, and the second swinging arms 2213 of the two clamping portions 221 are disposed at the same end. The two first swinging arms 2212 of each of the two clamping portions 221 can rotate synchronously. The two second swinging arms 2213 of each of the two clamping portions 221 can rotate synchronously. The first pressing rollers 2214 of the two clamping portions 221 are arranged adjacently to form a first pair of pressing rollers. The second pressing rollers 2215 of the two clamping portions 221 are arranged adjacently to form a second pair of pressing rollers. The rotation of the two first swinging arms 2212 of each of two clamping portions 221 can drive the first pressing roller 2214 to move towards or away from the pressing region *O*. Similarly, the rotation of the two second swinging arms 2213 of each of the two clamping portions 221 can drive the second pressing roller 2215 to move towards or away from the pressing region *O*. In other embodiments, two clamping portions 221 may form only one pair of pressing rollers. For example, each clamping portion 221 may omit the two second swinging arms 2213, the second pressing roller 2215, and the second connecting rod 2217.

Referring to FIG. 7, FIG. 7 is a schematic structural view of the separation member of the dewatering assembly in FIG. 1. The separation member 230 includes two connection portions 231 and a blow nozzle 232. Two opposite ends of the blow nozzle 232 are connected to the two connection portions 231, respectively. The blow nozzle 232 extends in a length direction of the separation member 230. The blow nozzle 232 has an outlet 2321. The outlet 2321 is disposed on one side of the blow nozzle 232 in a width direction of the blow nozzle 232. Airflow can be blown out through the outlet 2321. In this embodiment, the outlet 2321 is a continuous slit that extends in a length direction of the blow nozzle 232.

In other embodiments, the outlet 2321 may be a discontinuous gap; alternatively, the outlet 2321 may be formed by multiple air outlets arranged at intervals in the length direction of the blow nozzle 232.

Referring to FIG. 6, the separation member 230 is fixed to the base 400. Two opposite ends of the blow nozzle 232 are connected to the base 400 through the two connection portions 231, respectively. In the first direction (X-axis direction), the blow nozzle 232 and the dewatering member 220 are located at two opposite sides of the second common roller 60, respectively. It may be understood that, in the first direction (X-axis direction), the blow nozzle 232 is spaced apart from the dewatering member 220. After passing through the two clamping portions 221, the pressing region *O* continues to move, passing through the second common roller 60, to the blow nozzle 232. Multiple outlets 2321 of the blow nozzle 232 face towards the pressing region *O*.

In the first direction (X-axis direction), the isolation plate 240 is located between the dewatering member 220 and the separation member 230. Two surfaces of the isolation plate 240, which are opposite to each other in a thickness direction of the separation member 230, face towards the dewatering member 220 and the separation member 230, respectively. In the second direction (Z-axis direction), an orthographic projection of the isolation plate 240 on the base 400 falls within an orthographic projection of the second common roller 60 on the base 400.

It may be understood that the foil is placed on the carrying surface 31 of the conveyor belt 30. The conveyor belt 30 can bring the foil to move towards the conveying end point S2 of the conveying device 100. When the foil reaches the first common roller 50, the foil will rotate around the first common roller 50 along with the conveyor belt 30. The conveyor belt 30 and the pressing belt 40 are pressed together to form the pressing region *O,* where the foil is sandwiched between the pressing surface 41 of the pressing belt 40 and the carrying surface 31 of the conveyor belt 30. The foil then moves towards the second common roller 60 along with the pressing belt 40 and the conveyor belt 30. During movement of the foil from the first common roller 50 to the second common roller 60, the foil will pass through two clamping portions 221. The two first pressing rollers 2214 may press the foil, squeezing out the moisture carried by the foil. The two second pressing rollers 2215 may also press the foil, squeezing out the moisture carried by the foil. In essence, as the foil moves from the first common roller 50 to the second common roller 60, the foil undergoes two stages of moisture squeezing.

When the foil reaches the second common roller 60, the foil will rotate around the second common roller 60 along with the conveyor belt 30 and the pressing belt 40. The foil continues to move towards the third common roller 70 along with the conveyor belt 30 and the pressing belt 40. The foil is sandwiched between the pressing surface 41 of the pressing belt 40 and the carrying surface 31 of the conveyor belt 30. When the foil passes through the blow nozzle 232, the airflow blown from the blow nozzle 232 will pass through the ventilation hole 43 of the pressing belt 40 and reach a position between the pressing surface 41 of the pressing belt 40 and the foil, thereby drying any remaining moisture between the foil and the pressing belt 40. This reduces an adhesive force between the foil and the pressing belt 40 due to moisture, facilitating the subsequent disengagement of the foil from the pressing belt 40. Since the isolation plate 240 and the separation member 230 are respectively disposed at two opposite sides of the pressing belt 40, when the blow nozzle 232 of the separation member 230 blows air towards the pressing belt 40, some water droplets on the pressing belt 40 may be blown towards the isolation plate 240 and drip along a surface of the isolation plate. Therefore, the isolation plate 240 helps to prevent water droplets from being blown towards part of the conveyor belt 30 and part of the pressing belt 40 that are between the first common roller 50 and the second common roller 60, improving the dewatering efficiency of the dewatering member 220.

When the foil reaches the third common roller 70 along with the conveyor belt 30 and the pressing belt 40 and the foil rotates around the third common roller 70 along with the conveyor belt 30, the conveyor belt 30 will disengage from the third common roller 70, and the part of the conveyor belt 30 in the pressing region *O* will disengage from the part of the pressing belt 40 in the pressing region *O* . The foil will separate from the pressing belt 40 and continue to move towards the conveying end point S2 of the conveying device 100 along with the conveyor belt 30. When the foil moves to the conveying end point S2 of the conveying device 100 along with the conveyor belt 30, the rotary brush 90 can cause the foil to separate from the conveyor belt 30 at an edge of the rotary brush 90, thus driving the entire foil to disengage from the conveyor belt 30 and slide along the rotary brush 90 into the collecting device 300.

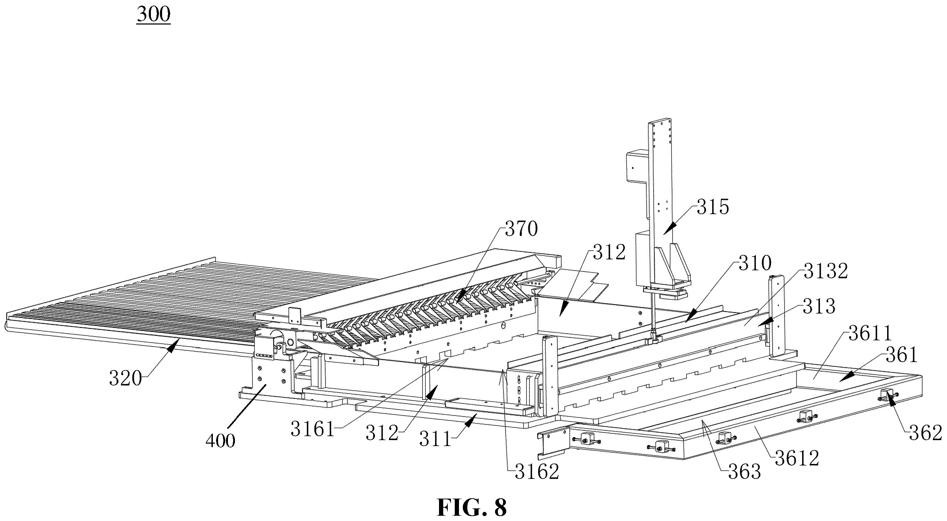

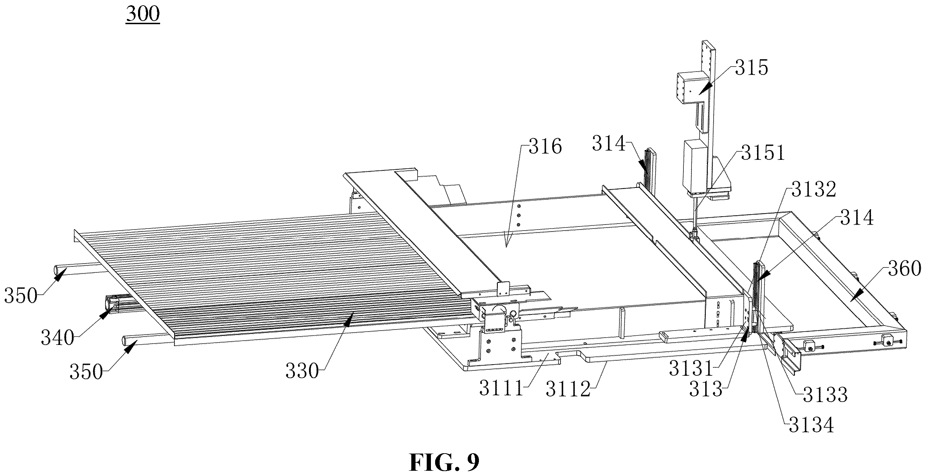

Referring to FIG. 8 and FIG. 9, FIG. 8 is a schematic structural view of the collecting device of the foil recovery apparatus in FIG. 1, viewed from a first direction, and FIG. 9 is a schematic structural view of the collecting device in FIG. 8, viewed from a second direction. The collecting device 300 includes a storage bin 310, a carrying platform 320, a recovery member 360, and a cutting member 370. The carrying platform 320, the cutting member 370, the storage bin 310, and the recovery member 360 are sequentially connected.

The storage bin 310 includes a bottom plate 311, two side plates 312, a pushing plate 313, two sliding rails 314, and a switch driving member 315. The bottom plate 311 has a receiving surface 3111 and a transition surface 3112. The receiving surface 3111 and the transition surface 3112 are opposite to each other in a thickness direction of the bottom plate 311. The two side plates 312 protrude from the receiving surface 3111 of the bottom plate 311 and extend in a direction away from the receiving surface 3111. An included angle is defined between the receiving surface 3111 and each of the two side plates 312. In a width direction of the storage bin 310, the two side plates 312 are opposite to each other. The two side plates 312 and the bottom plate 311 define a receiving cavity 316. In a length direction of the storage bin 310, a first opening 3161 and a second opening 3162 are defined at intervals between the two side plates 312. The first opening 3161 and the second opening 3162 are respectively disposed at two opposite sides of the receiving cavity 316 and are in communication with the receiving cavity 316.

In this embodiment, the pushing plate 313 is disposed at the second opening 3162. The pushing plate 313 includes an abutting surface 3131 and a sliding surface 3132. The abutting surface 3131 and the sliding surface 3132 are opposite to each other in a thickness direction of the pushing plate 313. The sliding surface 3132 of the pushing plate 313 defines two sliding grooves 3133. The two sliding grooves 3133 are spaced apart from each other in a width direction of the pushing plate 313. Each sliding groove 3133 extends in the second direction.

It may be noted that two sliders 3134 may protrude from the abutting surface 3131 of the pushing plate 313, and each of the two sliders 3134 defines the sliding groove 3133. Alternatively, the two sliding grooves 3133 may be directly defined on the sliding surface 3132 of the abutting surface 3131. The disclosure does not impose any specific limitations on this.

In this embodiment, the two sliding rails 314 are disposed outside the receiving cavity 316. In a width direction of the collecting device 300, the two sliding rails 314 are disposed at two opposite sides of the receiving cavity 316, respectively. In the first direction, multiple sliding rails 314 are disposed at one side of the second opening 3162 away from the first opening 3161. Each of the two sliding rails 314 protrudes from the receiving surface 3111 of the bottom plate 311 and extends in a direction away from the receiving surface 3111. Both of the two sliding rails 314 extend in the second direction.

The pushing plate 313 is slidably connected to the two sliding rails 314 through the two sliding grooves 3133. The switch driving member 315 includes a drive shaft 3151. The drive shaft 3151 is connected to the pushing plate 313. The drive shaft 3151 is configured to drive the two sliding grooves 3133 of the pushing plate 313 to move along the two sliding rails 314. In other words, the drive shaft 3151 is configured to drive the pushing plate 313 to move in the second direction. In the second direction, the pushing plate 313 can cover the second opening 3162 when the pushing plate 313 moves towards the bottom plate 311, and the pushing plate 313 can expose the second opening 3162 when the pushing plate 313 moves away from the bottom plate 311. In this embodiment, the switch driving member 315 is a switch cylinder. In other embodiments, the switch driving member 315 may be a linear motor. The disclosure does not impose specific limitations on this.

In the first direction, the storage bin 310 is disposed at one side of the rotary brush 90 away from the conveyor belt 30. In the second direction, the storage bin 310 is disposed at one side of the rotary brush 90 away from the second roller set M2. The storage bin 310 is connected to the base 400.

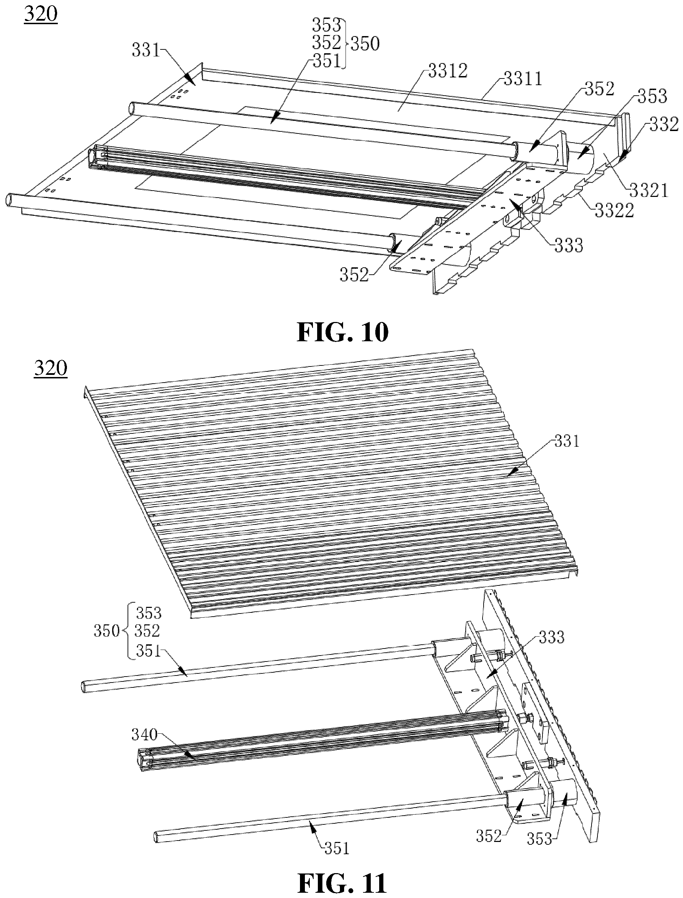

Referring to FIG. 10 and FIG. 11, FIG. 10 is a schematic structural view of the carrying platform in FIG. 8, and FIG. 11 is an exploded schematic structural view of the carrying platform in FIG. 10. The carrying platform 320 includes a carrying member 330, a pushing member 340, and two guiding members 350. The carrying member 330 includes a carrying plate 331, a pressing plate 332, and a mounting plate 333. The carrying plate 331 includes a carrying surface 3311 and a mounting surface 3312. The carrying surface 3311 is opposite to the mounting surface 3312 in a thickness direction of the carrying plate 331. The pressing plate 332 is connected to one end of the carrying plate 331 in a length direction of the carrying plate 331. The pressing plate 332 protrudes from the mounting surface 3312 of the carrying plate 331 and extends in a direction away from the mounting surface 3312. An included angle is defined between the pressing plate 332 and the mounting surface 3312. The carrying plate 331 and the pressing plate 332 form an L-shaped structure. The pressing plate 332 has a pressing surface 3321 and a pushing surface 3322. The pressing surface 3321 is opposite to the pushing surface 3322 in a thickness direction of the pressing plate 332. The mounting plate 333 protrudes from the mounting surface 3312 of the carrying plate 331 and extends in a direction away from the mounting surface 3312. An included angle is defined between the mounting plate 333 and the mounting surface 3312. In a length direction of the carrying platform 320, the mounting plate 333 is disposed at one side of the pressing surface 3321 of the pressing plate 332 away from the pushing surface 3322, and the mounting plate 333 is spaced apart from the pressing plate 332. The mounting plate 333 defines a drive hole 3331 and two balance holes 3332. All the drive hole 3331 and the two balance holes 3332 extend through two surfaces of the mounting plate 333 that are opposite to each other in a thickness direction of the mounting plate 333. In a width direction of the carrying platform 320, the two balance holes 3332 are symmetrically disposed at two opposite sides of the drive hole 3331, respectively.

The pushing member 340 includes a pushing rod 341. In this embodiment, the pushing member 340 is a pushing rod cylinder. In other embodiments, the pushing member 340 may be a linear motor. The disclosure does not impose specific limitations on this.

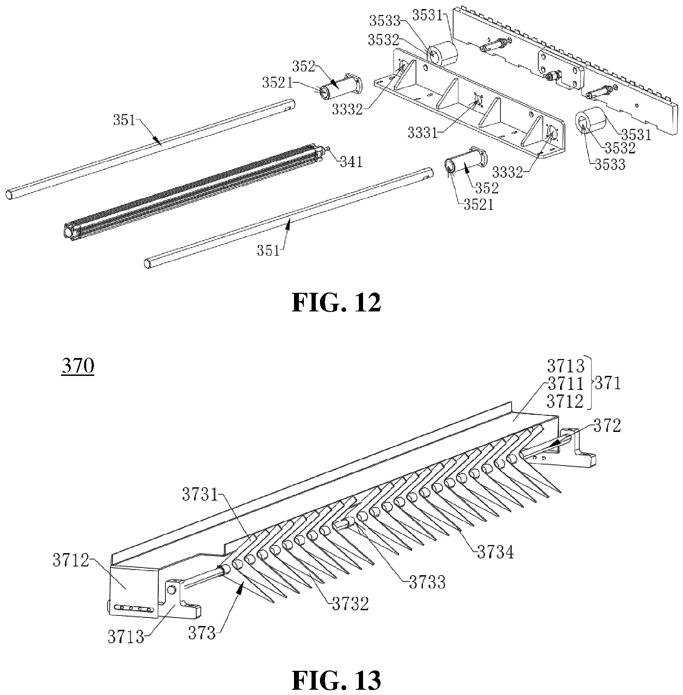

Referring to FIG. 12, FIG. 12 is a partial exploded schematic structural view of the carrying platform in FIG. 11. Each guiding member 350 includes a guiding rod 351, a sleeve 352, and a linear bearing 353. The linear bearing 353 has a first end face 3531 and a second end face 3532. The first end face 3531 is opposite to the second end face 3532 in a thickness direction of the linear bearing 353. The linear bearing 353 defines a through hole 3533. In the thickness direction of the linear bearing 353, the through hole 3533 extends through both the first end face 3531 and the second end face 3532.

The sleeve 352 defines a through hole 3521. The through hole 3521 extends through two surfaces of the sleeve 352 that are opposite to each other in a length direction of the sleeve 352. A diameter of the through hole 3533 of the linear bearing 353 is larger than that of the through hole 3521 of the sleeve 352. The sleeve 352 of each guiding member 350 is connected to the second end face 3532 of the linear bearing 353. The through hole 3521 of the sleeve 352 is coaxially aligned with the through hole 3533 of the linear bearing 353. The guiding rod 351 of each guiding member 350 sequentially extends through the sleeve 352 and the linear bearing 353. The guiding rod 351 is movable back and forth through the through hole 3521 of the sleeve 352 and the through hole 3533 of the linear bearing 353. In other embodiments, each guiding member 350 may omit the sleeve 352, and only include the guiding rod 351 and the linear bearing 353.

In the first direction, the carrying platform 320 is disposed at one side of the receiving cavity 316 away from the pushing plate 313. Specifically, the carrying member 330 is slidably connected to the base 400. The pushing member 340 is connected to the base 400. The pushing member 340 is movably connected to the pressing plate 332 of the carrying member 330. In the first direction, the pressing plate 332 is opposite to the pushing plate 313. In the width direction of the collecting device 300, the pressing plate 332 of the carrying platform 320 is limited between the two side plates 312. The mounting plate 333 is disposed at one side of the pressing plate 332 away from the second opening 3162. In the second direction, the carrying plate 331 of the carrying platform 320 is spaced apart from the bottom plate 311 of the storage bin 310.

The pushing rod 341 of the pushing member 340 extends through the drive hole 3331 of the mounting plate 333 and is connected to the pushing surface 3322 of the pressing plate 332. The pushing rod 341 of the pushing member 340 is configured to drive the pressing plate 332 to move back and forth in the first direction within the receiving cavity 316 of the storage bin 310. In the width direction of the collecting device 300, the two guiding members 350 are disposed at two opposite sides of the pushing member 340, respectively. The first end face 3531 of the linear bearing 353 of each guiding member 350 is fixed to the pushing surface 3322 of the pressing plate 332. The sleeve 352 extends through one of the balance holes 3332 of the mounting plate 333 and is connected to a wall of the balance hole 3332. The guiding rod 351 sequentially extends through the sleeve 352 and the linear bearing 353 and is connected to the pushing surface 3322 of the pressing plate 332.

It may be understood that the pushing member 340 is capable of driving the pressing plate 332 to move, within the receiving cavity 316, from the first opening 3161 towards the pushing plate 313, such that the carrying plate 331 can cover the receiving cavity 316. The pushing member 340 is also capable of driving the pressing plate 332 to move, within the receiving cavity 316, away from the pushing plate 313, such that the carrying plate 331 can expose the receiving cavity 316. During movement of the pressing plate 332 driven by the pushing member 340, the guiding rod 351 of each guiding member 350 can move through the through hole 3521 of the sleeve 352 and the through hole 3533 of the linear bearing 353. The two guiding members 350 are symmetrically located at two opposite sides of the pushing member 340, respectively. The two guiding members 350 enable the pressing plate 332 to maintain balanced force distribution during movement.

Referring to FIG. 8 and FIG. 9, the recovery member 360 includes a recovery basket 361 and multiple fixing portions 362. The recovery basket 361 includes an inner surface 3611 and an outer surface 3612. The inner surface 3611 is opposite to the outer surface 3612 in a thickness direction of the recovery basket 361. The inner surface 3611 defines a recovery opening 363. The multiple fixing portions 362 are fixed to the outer surface 3612 of the recovery member 360 and are arranged around the recovery opening 363 at intervals. The fixing portions 362 are used to secure a recovery bag. The recovery basket 361 is fixed to the bottom plate 311. In the first direction, the recovery opening 363 is disposed at one side of the second opening 3162 away from the receiving cavity 316. In this embodiment, the recovery basket 361 is fixed to the transition surface 3112 of the bottom plate 311.

Referring to FIG. 13. FIG. 13 is a schematic structural view of the cutting member in FIG. 8. The cutting member 370 includes a fixed frame 371, a connecting shaft 372, and multiple scraping blades 373. The fixed frame 371 includes a first plate body 3711, a second plate body 3712, and two mounting portions 3713. The first plate body 3711 includes a first face and a second face. The first face is opposite to the second face in a thickness direction of the first plate body 3711. The two second plate bodies 3712 are connected to two opposite ends of the first plate body 3711 in a length direction of the first plate body 3711, respectively. The two second plate bodies 3712 each protrude from the first face of the first plate body 3711 and extend in a direction away from the first face. An included angle is defined between the first face and each of the two second plate bodies 3712. The two mounting portions 3713 are connected to the two second plate bodies 3712, respectively. Two opposite ends of the connecting shaft 372 are connected to the two mounting portions 3713, respectively. The connecting shaft 372 extends in a length direction of the cutting member 370. It may be understood that one end of the connecting shaft 372 is indirectly connected to one of the two second plate bodies 3712 via a mounting portion 3713, and another end of the connecting shaft 372 is indirectly connected to another one of the two second plate bodies 3712 via another mounting portion 3713.

In this embodiment, each scraping blade 373 includes a limiting portion 3731 and a scraping portion 3732. The limiting portion 3731 and the scraping portion 3732 of each scraping blade 373 are connected to each other. An included angle is defined between an extension direction of the limiting portion 3731 and an extension direction of the scraping portion 3732, where the included angle is less than 180°. Each limiting portion 3731 defines a connection hole 3733 at one end of the limiting portion 3731 close to the scraping portion 3732. A scraping end 3734 is disposed at one end of each scraping portion 3732 away from the limiting portion 3731. Each scraping end 3734 is a pointed tooth.

Each scraping blade 373 is sleeved on the connecting shaft 372 through the connection hole 3733, and each scraping blade 373 is capable of rotating around the connecting shaft 372. It may be understood that each scraping blade 373 is rotatably connected to the connecting shaft 372. The multiple scraping blades 373 are spaced apart from each other in an extending direction of the connecting shaft 372. An included angle defined between the limiting portion 3731 and the scraping portion 3732 of each scraping blade 373 is oriented towards the same side of the fixed frame 371 in a width direction of the fixed frame 371. During rotation of the multiple scraping blades 373 around the connecting shaft 372, the first plate body 3711 of the fixed frame 371 limits the limiting portion 3731 of each scraping blade 373, ensuring that the included angle between the limiting portion 3731 and the scraping portion 3732 of each scraping blade 373 is always oriented towards the same side of the fixed frame 371 in the width direction of the fixed frame 371.

It may be noted that, in other embodiments, the multiple scraping blades 373 may be integrally connected.

The cutting member 370 is fixed to the base 400 and is located between the storage bin 310 and the carrying platform 320. In the second direction, the cutting member 370 is disposed at one side of the carrying plate 331 away from the pressing plate 332. The connecting shaft 372 of the cutting member 370 extends in the width direction of the collecting device 300. In the first direction, the included angle defined between the limiting portion 3731 and the scraping portion 3732 of each of the multiple scraping blades 373 is oriented towards the storage bin 310. The scraping end 3734 of each of the multiple scraping blades 373 is in contact with the carrying surface 3311 of the carrying plate 331.

Referring to FIG. **1****,** the collecting device 300 has an initial state. In the initial state, the carrying platform 320 is positioned at an initial position. Specifically, in the initial state, the pressing plate 332 of the carrying platform 320 is disposed at the first opening 3161 of the storage bin 310. When the foil slides into the collecting device 300 along the rotary brush 90, the foil will fall into the storage bin 310 of the collecting device 300.

When the foil in the storage bin 310 accumulates to a certain amount, the pushing rod 341 of the pushing member 340 will push the pressing plate 332 to move towards the pushing plate 313. During movement of the pressing plate 332 within the receiving cavity 316 of the storage bin 310, the pressing plate 332 can push the foil in the storage bin 310 to the pushing plate 313. As the pressing plate 332 moves towards the pushing plate 313, the pressing plate 332 can drive the carrying plate 331 to move towards the storage bin 310, causing the carrying plate 331 to cover the receiving cavity 316 of the storage bin 310. When the foil slides into the collecting device 300 along the rotary brush 90, the foil will fall onto the carrying plate 331 of the carrying platform 320. When the pressing plate 332 reaches near the pushing plate 313, the pressing plate 332 continues to move towards the pushing plate 313 to press the foil between the pressing plate 332 and the pushing plate 313, causing the foil to be compressed into a foil block after being pressed. Subsequently, the switch driving member 315 controls the pushing plate 313 to move upward to expose the second opening 3162. The pushing rod 341 of the pushing member 340 continues to push the pressing plate 332 to move towards the recovery member 360, so that the pressing plate 332 can push the foil block, formed by compressing, into the recovery opening 363, allowing the foil block to fall into the recovery bag secured by the fixing portion 362 of the recovery member 360, achieving the recovery of the foil. Afterward, the collecting device 300 returns to the initial state, with the carrying platform 320 returning to the initial position.

During the process of the carrying platform 320 returning to the initial position, because the scraping ends 3734 of the multiple scraping blades 373 of the cutting member 370 are in contact with the carrying surface 3311 of the carrying plate 331, and the included angle defined between the limiting portion 3731 and the scraping portion 3732 of each of the multiple scraping blades 373 is oriented towards the storage bin 310, the foil on the carrying plate 331, when passing through the cutting member 370, will be scraped off by the scraping ends 3734 of the multiple scraping blades 373, causing the foil to fall into the storage bin 310 from the carrying plate 331.

It may be understood that the foil recovery apparatus 1000 provided in the embodiments of the disclosure includes the conveying device 100, where the conveyor belt 30 of the conveying device 100 is capable of transporting the foil to the second roller set M2. When the conveyor belt 30 conveys the foil to move around the second roller set M2, the conveyor belt 30 and the pressing belt 40 are pressed together to form the pressing region *O*. The foil is sandwiched between the pressing belt 40 and the conveyor belt 30, and the foil will move through the dewatering member 220, which can dewater the foil. Subsequently, the foil moves through the blow nozzle 232, which can remove the water between the foil and the pressing belt 40 to reduce the adhesive force between the foil and the pressing belt 40. The foil continues to move along with the conveyor belt 30 towards the collecting device 300, and the foil will be compressed and collected after moving through the collecting device 300. The collecting device 300 is capable of automatically collecting the dewatered foil. Therefore, the foil recovery apparatus 1000 provided in the embodiments of the disclosure can remove the moisture from the foil during the recovery process and collect the dewatered foil, thereby improving the foil recovery efficiency.

The embodiments of the disclosure are described in detail above, specific examples are used herein to describe the principle and implementation manners of the disclosure. The description of the above embodiments is merely used to help understand the method and the core idea of the disclosure. Meanwhile, those of ordinary skill in the art may make modifications to the specific implementation manners and the application scope according to the idea of the disclosure. In summary, the contents of the specification should not be construed as limiting the disclosure.

## Claims

1. A foil recovery apparatus (1000), comprising a base (400), a conveying device (100), and a collecting device (300), wherein the conveying device (100) comprises a conveyor belt (30) and a first roller set (M1), the first roller set (M1) is connected to the base (400) and comprises a first conveying roller (10) and a second conveying roller (20), the conveyor belt (30) has a carrying surface (31), the first conveying roller (10) is opposite to the second conveying roller (20) in a first direction, the conveyor belt (30) is driven around the first conveying roller (10) and the second conveying roller (20) for transmission, and the first direction is a conveying direction of the conveyor belt (30);
the collecting device (300) comprises a storage bin (310) and a carrying platform (320), wherein the storage bin (310) comprises a pushing plate (313) and defines a receiving cavity (316), the storage bin (310) defines a first opening (3161), the pushing plate (313) and the first opening (3161) are located on two opposite sides of the receiving cavity (316) in the first direction, respectively, and the carrying platform (320) comprises a pressing plate (332); and
in the first direction, the storage bin (310) is disposed at one side of the second conveying roller (20) away from the first conveying roller (10), the carrying platform (320) is disposed at one side of the storage bin (310) where the first opening (3161) is defined, the pressing plate (332) is opposite to the pushing plate (313), the conveying device (100) is configured to convey a foil into the receiving cavity (316), and the pressing plate (332) is operable to enter the receiving cavity (316) through the first opening (3161) to compress the foil within the receiving cavity (316) along with the pushing plate (313).

2. The foil recovery apparatus (1000) according to claim 1, wherein the conveying device (100) further comprises a pressing belt (40) and a second roller set (M2), wherein the second roller set (M2) is connected to the base (400) and located between the first conveying roller (10) and the second conveying roller (20), the conveyor belt (30) is driven around the second roller set (M2) for transmission, the pressing belt (40) is driven around the second roller set (M2) for transmission, the pressing belt (40) is configured to perform transmission in a second direction, and the conveyor belt (30) is in contact with the pressing belt (40) to form a pressing region when the conveyor belt (30) is driven around the second roller set (M2) for transmission.

3. The foil recovery apparatus (1000) according to claim 2, further comprising a dewatering assembly (200), wherein the dewatering assembly (200) comprises two clamping portions (221), both of the two clamping portions (221) are connected to the base (400) and arranged in parallel, the pressing region is operable to pass through the two clamping portions (221), the foil is sandwiched and clamped by part of the conveyor belt (30) in the pressing region and part of the pressing belt (40) in the pressing region when the conveyor belt (30) conveys the foil to enable the foil to move around the second roller set (M2), the part of the conveyor belt (30) in the pressing region and the part of the pressing belt (40) in the pressing region disengage from each other when the part of the conveyor belt (30) in the pressing region disengages from the second roller set (M2) to allow the part of the conveyor belt (30) in the pressing region to move in the first direction and the part of the pressing belt (40) in the pressing region to move in the second direction, and the second direction is perpendicular to the first direction.

4. The foil recovery apparatus (1000) according to claim 3, wherein the second roller set (M2) comprises a first common roller (50), a second common roller (60), a third common roller (70), and two connecting rollers (80), the first common roller (50) and the third common roller (70) are opposite to each other in the first direction and located between the first conveying roller (10) and the second conveying roller (20), the second common roller (60) is spaced apart from both the first common roller (50) and the third common roller (70) in the second direction, an orthographic projection of the second common roller (60) on the conveyor belt (30) is located between an orthographic projection of the first common roller (50) on the conveyor belt (30) and an orthographic projection of the third common roller (70) on the conveyor belt (30), and in the second direction, one of the two connecting rollers (80) is spaced apart from and arranged opposite to the first common roller (50), and another one of the two connecting rollers (80) is spaced apart from and arranged opposite to the second common roller (60);
all the first conveying roller (10), the second conveying roller (20), and the second common roller (60) are rotatable in a same direction, and all the first common roller (50), the third common roller (70), and the two connecting rollers (80) are rotatable in a direction opposite a direction in which the second conveying roller (20) is rotatable;
the conveyor belt (30) is arranged, through the first conveying roller (10) and the first common roller (50), around the second common roller (60) disposed in the second direction, and then arranged, through the third common roller (70), around the second conveying roller (20) in the first direction, to achieve cyclic transmission; and
the pressing belt (40) is arranged, through the first common roller (50), around the second common roller (60) disposed in the second direction, and then arranged, through the third common roller (70), around the two connecting rollers (80) disposed in the second direction, to achieve cyclic transmission.

5. The foil recovery apparatus (1000) according to claim 4, wherein the dewatering assembly (200) further comprises a blow nozzle (232), the blow nozzle (232) has an outlet (2321), and the outlet (2321) is disposed on one side of the blow nozzle (232) in a width direction of the blow nozzle (232); and
two opposite ends of the blow nozzle (232) are connected to the base (400), and the blow nozzle (232) is spaced apart from the two clamping portions (221) in the first direction, wherein when the pressing region passes through the two clamping portions (221) in the second direction, and then passes through the second common roller (60) and reaches the blow nozzle (232), the outlet (2321) faces towards the pressing region.

6. The foil recovery apparatus (1000) according to claim 5, wherein the dewatering assembly (200) further comprises an isolation plate (240) mounted to the base (400), the isolation plate (240) is located between the two clamping portions (221) and the blow nozzle (232) in the first direction, and two surfaces of the isolation plate (240), opposite each other in a thickness direction of the isolation plate (240), faces towards the two clamping portions (221) and the blow nozzle (232), respectively.

7. The foil recovery apparatus (1000) according to claim 6, wherein each of the two clamping portions (221) comprises two first swinging arms (2212) and a first pressing roller (2214), the two first swinging arms (2212) are opposite to each other in a width direction of the foil recovery apparatus (1000), one end of each of the two first swinging arms (2212) is rotatably connected to the base (400), and the first pressing roller (2214) is located between and connected to another end of one of the two first swinging arms (2212) and another end of another one of the two first swinging arms (2212); and
the two first swinging arms (2212) of each of the two clamping portions (221) are rotatable to drive the first pressing roller (2214) to move towards or away from the pressing region.

8. The foil recovery apparatus (1000) according to claim 7, wherein each of the two clamping portions (221) further comprises two second swinging arms (2213) and a second pressing roller (2215), the two second swinging arms (2213) are opposite to each other in the width direction of the foil recovery apparatus (1000), one end of each of the two second swinging arms (2213) is rotatably connected to the base (400), and the second pressing roller (2215) is located between and connected to another end of one of the two second swinging arms (2213) and another end of another one of the two second swinging arms (2213), and the second pressing roller (2215) is spaced apart from the first pressing roller (2214) in the second direction; and
the two second swinging arms (2213) of each of the clamping portions (221) are rotatable to drive the second pressing roller (2215) to move towards or away from the pressing region.

9. The foil recovery apparatus (1000) according to any one of claims 1 to 8, wherein the conveying device (100) further comprises a rotary brush (90) connected to the base (400), the rotary brush (90) is located between the conveyor belt (30) and the receiving cavity (316) in the first direction, and the rotary brush (90) is rotatable in a same direction as the second conveying roller (20); and
the rotary brush (90) is configured to separate the foil from the conveyor belt (30) to make the foil slide along the rotary brush (90) into a receiving cavity (316) of the collecting device (300).

10. The foil recovery apparatus (1000) according to claim 2, wherein the carrying platform (320) further comprises a carrying plate (331) and a pushing member (340), the pressing plate (332) protrudes from one end of the carrying plate (331) in the first direction, and an included angle is defined between the pressing plate (332) and the carrying plate (331); and
the carrying plate (331) is slidably connected to the base (400), and the pushing member (340) is connected to the base (400) and the pressing plate (332), wherein the pushing member (340) is configured to drive the pressing plate (332) to move, within the receiving cavity (316), from the first opening (3161) towards the pushing plate (313) to cover the receiving cavity (316), or to drive the pressing plate (332) to move, within the receiving cavity (316), away from the pushing plate (313) to expose the receiving cavity (316).

11. The foil recovery apparatus (1000) according to claim 10, wherein the storage bin (310) further defines a second opening (3162), the first opening (3161) and the second opening (3162) are located at two opposite ends of the receiving cavity (316) in the first direction, respectively, and the pushing plate (313) is disposed at the second opening (3162);
the storage bin (310) further comprises two sliding rails (314) and a switch driving member (315), wherein the two sliding rails (314) extend in the second direction, the pushing plate (313) defines two sliding grooves (3133) that extend in the second direction, and the pushing plate (313) is slidably connected to the two sliding rails (314) via the two sliding grooves (3133); and
the switch driving member (315) is mounted to the base (400), and the switch driving member (315) is configured to drive the pushing plate (313) to move in the second direction to expose or cover the second opening (3162).

12. The foil recovery apparatus (1000) according to claim 11, wherein the carrying platform (320) further comprises a mounting plate (333) disposed at one side of the pressing plate (332), the mounting plate (333) is spaced apart from and opposite to the pressing plate (332) in the first direction and defines a drive hole (3331) and two balance holes (3332), and the two balance holes (3332) are symmetrically disposed at two opposite sides of the drive hole (3331) in a width direction of the foil recovery apparatus (1000);
the carrying platform (320) further comprises two guiding members (350), wherein each of the two guiding member (350) comprises a guiding rod (351), a sleeve (352), and a linear bearing (353), and the sleeve (352) defines a through hole (3521), and the linear bearing (353) defines a through hole (3533); and
the linear bearing (353) of each of the two guiding members (350) is connected to the pressing plate (332), the sleeves (352) of the two guiding members (350) extend through the two balance holes (3332), respectively, the sleeve (352) and the linear bearing (353) of each of the two guiding member (350) are connected to and coaxially arranged with each other, and the guiding rod (351) of each of the two guiding members (350) extends through the sleeve (352) and the linear bearing (353) in sequence, abuts against the pressing plate (332), and is capable of moving back and forth along a wall of the through hole (3521) of the sleeve (352) and a wall of the through hole (3533) of the linear bearing (353).

13. The foil recovery apparatus (1000) according to claim 12, wherein the collecting device (300) further comprises a cutting member (370), the cutting member (370) comprises a connecting shaft (372) and a plurality of scraping blades (373), each of the plurality of scraping blades (373) has a scraping end (3734), and the plurality of scraping blades (373) are rotatably connected to the connecting shaft (372) and spaced apart from each other in the width direction of the foil recovery apparatus (1000); and
in the second direction, the cutting member (370) is disposed at one side of the carrying plate (331) away from the receiving cavity (316), two opposite ends of the connecting shaft (372) are connected to the base (400), the scraping end (3734) of each of the plurality of scraping blades (373) is in contact with the carrying plate (331), the pushing member (340) is configured to drive the carrying plate (331) to move away from the pushing plate (313), and the scraping ends (3734) of the plurality of scraping blades (373) are capable of scraping the foil carried by the carrying plate (331) into the receiving cavity (316).

14. The foil recovery apparatus (1000) according to claim 13, wherein the cutting member (370) further comprises a fixed frame (371), the fixed frame (371) comprises a first plate body (3711) and two second plate bodies (3712), and both of the two second plate bodies (3712) protrude from a same surface of the first plate body (3711) and are disposed at two opposite ends of the first plate body (3711), respectively;
each of the plurality of scraping blades (373) comprises a limiting portion (3731) and a scraping portion (3732), wherein one end of the limiting portion (3731) is connected to one end of the scraping portion (3732), an included angle is defined between the limiting portion (3731) and the scraping portion (3732), the scraping end (3734) is disposed on one end of the scraping portion (3732) away from the limiting portion (3731), and the limiting portion (3731) defines a connection hole (3733) at one end of the limiting portion (3731) close to the scraping portion (3732); and
two opposite ends of the connecting shaft (372) are connected to the two second plate bodies (3712), respectively, each of the plurality of scraping blade (373) is sleeved on the connecting shaft (372) via the connection hole (3733), and the included angle between the limiting portion (3731) and the scraping portion (3732) of each of the plurality of scraping blades (373) is oriented towards the storage bin (310).

15. The foil recovery apparatus (1000) according to claim 11, wherein the collecting device (300) further comprises a recovery member (360), the recovery member (360) comprises a recovery basket (361) and a plurality of fixing portions (362), the recovery basket (361) comprises an inner surface (3611) and an outer surface (3612), the inner surface (3611) and the outer surfaces (3612) are opposite to each other in a thickness direction of the recovery basket (361), the inner surface (3611) defines a recovery opening (363), the plurality of fixing portions (362) are fixed to the outer surface (3612) of the recovery member (360) and arranged around the recovery opening (363) at intervals, the recovery basket (361) is connected to the storage bin (310), and the recovery opening (363) is disposed at one side of the second opening (3162) away from the receiving cavity (316) in the first direction.
